# EUROPEAN PATENT APPLICATION

(11) **EP 3 960 694 A1**
(43) Date of publication of application: **02.03.2022**
(21) Application number: 20193799.2
(22) Date of filing: 01.09.2020
(51) Int. Cl.: B67B 3/00, B67B 3/06, B67B 3/26

(54) **RECEPTACLE CLOSURES STERILIZATION APPARATUS**

(71) Applicant: Sidel Participations, 76930 Octeville-sur-Mer (FR)
(72) Inventor: BERNINI, Stefano, 43126 Parma (IT); FAVA, Fabrizio, 43126 Parma (IT); CARRAGLIA, Corrado, 43126 Parma (IT)
(74) Representative: Sidel Group

(57) **Abstract**

There is described a receptacle closures sterilization apparatus (1; 1') comprising:
- a motorized conveyor (6, 6') configured to convey a plurality of closures (2) along a treatment path (P), from an input station (I), at which closures (2) to be sterilized are received by the motorized conveyor (6, 6'), to an output station (O), at which sterilized closures (2) exit the motorized conveyor (6, 6');
- a sterilization unit (5, 5') arranged along the treatment path (P), downstream of the input station (I) and upstream of the output station (O) and configured to sterilize the closures (2); and
- a feeding device (4, 4') arranged upstream of the input station (I) and configured to feed the plurality of closures (2) to the motorized conveyor (6, 6') and to regulate a flow rate of the plurality of closures (2) through the input station (I).

## Description

### TECHNICAL FIELD

The present invention relates to a receptacle closures sterilization apparatus, in particular an apparatus for sterilizing closures such as screw caps, which the following description will refer to, although this being in no way intended to limit the scope of protection as defined by the accompanying claims.

The present invention may be also used to particular advantage for any type/format of closures, such as differently sized caps, sports caps, stoppers and others to be applied on receptacles, in particular receptacles adapted to contain a pourable product, preferably a pourable food product.

### BACKGROUND ART

As it is known, many pourable products such as liquid products (mineral oils, lubricant oils, detergents), food liquid products (water, beer, milk, fruit juice, pulp drinks or soft drinks in general) or granular or powder products (flour, sugar, salt or the like) are sold in receptacles having various shapes and dimensions and made of different materials, such as plastic, glass, aluminum or composite bottles, jars or the like.

In general, the receptacles, prior to being filled with the pourable product, are sterilized by means of a receptacle sterilization apparatus and are subsequently filled with the desired pourable product by means of a filling apparatus.

Generally, filling apparatuses and receptacle sterilizing apparatuses are part of a more complex packaging machine configured to carry out a series of successive operations on the receptacles and comprising other apparatuses, such as a labeling apparatus, a capping apparatus, a pre-form blower apparatus (in the case of plastic receptacles), etc.

Normally, the filling apparatus, the labelling apparatus and the capping apparatus are of the rotatable type, meaning that during respectively the filling, the labelling and the capping operations the receptacles are advanced along respectively a filling path, a labelling path and a capping path by means of respective conveying carousels. Furthermore, the filling apparatus, the labeling apparatus and the capping apparatus are usually arranged in succession and are typically connected to one another by interposed conveyor devices, such as star wheels.

After filling, the receptacles, and in particular their respective pourable product inlet/outlet openings, are typically closed and sealed by means of the application and fastening of respective receptacle closures thereon.

Such closures may be of the type known as caps, screw caps, sports caps, stoppers etc., and they may be produced from a variety of materials such as plastics and metal.

Hence, each receptacle undergoes, after filling, a capping operation, which is carried out by means of the capping apparatus.

Prior to the application on the receptacles, the closures must be sterilized and/or sanitized by means of a respective closure sterilization apparatus, within which the closures are sterilized. After sterilization, the sterile closures are fed to the capping apparatus.

An apparatus for sterilizing receptacle closures is known, for example, from the European patent EP-B-2318054 from the same Applicant and comprises a guide rail configured to receive closures to be sterilized at an inlet station and to guide such closures along a conveying path and towards an outlet station at which the sterilized closures are fed to the capping apparatus.

In detail, the closures are conveyed along the guide rail one after the other, i.e. contacting one another along the guide rail. In other words, the conveying operation occurs due to the pushing action of the trailing closures, which enter the guide rail from a known closure feeding unit, on the leading closures along the conveying path.

The sterilization apparatus further comprises a sterilization device having a treatment chamber inside which the guide rail passes through and housing an injection tube arranged below the portion of the guide rail inside the treatment chamber.

The injection tube injects, in use, a heated and vaporized sterilization agent, in particular hydrogen peroxide. To this end, the injection tube has a plurality of injection holes arranged over its complete longitudinal extension, so that by injection of the heated and vaporized sterilization agent a cloud of sterilization agent is formed within an injection zone of the treatment chamber, thereby defining a sterilization zone of the treatment chamber. In particular, the longitudinal extension of the injection zone is defined by the longitudinal extension of the injection tube.

In this manner, a mist or cloud of sterilizing agent is formed, through which the closures pass.

The sterilization apparatus also comprises a drying device adapted to direct heated air to the closures in the vicinity of the outlet station for drying off sterilization agent residues from the closures prior to exiting from the treatment chamber.

Although being functionally valid, the known sterilization apparatuses are still open for further improvements, in particular as to keep the treatment time as constant as possible despite the variations in the production rate and/or closures format changes.

In fact, it is known in the industry that if the treatment time is too short the closures may not undergo the appropriate sterilization, whereas if the treatment time is too long there is the risk that the closures may overheat, with the consequence of possible deformations, which render them unusable.

### DISCLOSURE OF INVENTION

It is therefore an object of the present invention to provide a receptacle closures sterilization apparatus which is designed to meet the above-mentioned need in a straightforward and low-cost manner.

This object is achieved by a receptacle closures sterilization apparatus as claimed in the appended claims.

### BRIEF DESCRIPTION OF THE DRAWINGS

Two non-limiting embodiments of the present invention will be described by way of example with reference to the accompanying drawings, in which:
Figure 1 is a perspective view, with parts removed for clarity, of a receptacle closures sterilization apparatus according to a first embodiment of the present invention;
Figure 2 is a larger-scale side view, with parts removed for clarity, of the apparatus of Figure 1;
Figures 3a and 3b are larger-scale perspective views, with parts removed for clarity, of a detail of the apparatus of Figure 1, during two different operative conditions;
Figure 4 is a plan view, with parts removed for clarity, of a receptacle closures sterilization apparatus according to a second embodiment of the present invention;
Figure 5 is a larger-scale schematic front view, with parts removed for clarity, of a detail of the apparatus of Figure 4 during handling of a closure; and
Figure 6 is a larger-scale perspective view, with parts removed for clarity, of the apparatus of Figure 4.

### BEST MODE FOR CARRYING OUT THE INVENTION

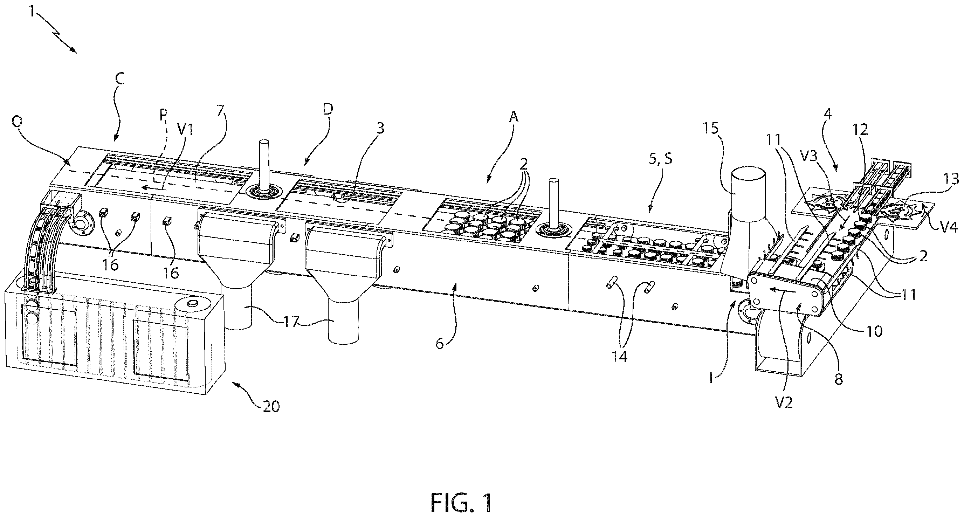

With reference to Figure 1, number 1 indicates as a whole a receptacle closures sterilization apparatus, in particular an apparatus 1 for sterilizing closures 2 adapted to be applied on receptacles (not shown) for containing a pourable product, in particular a pourable food product, such as water, milk, juice, wine, soft drinks, sugar, salt or the like.

The present description will refer to screw caps, although this being in no way intended to limit the scope of protection as defined by the accompanying claims.

Accordingly, the present invention may be also used to particular advantage for any type/format of closures 2, such as differently sized caps, sports caps, stoppers and others to be applied on the aforementioned receptacles.

Apparatus 1 is configured to sterilize closures 2 prior to the application thereof onto the receptacles to close and seal their respective pourable product inlet/outlet opening.

Hence, in one embodiment, apparatus 1 is part of a more complex packaging machine (not shown) also including other apparatuses, such as a filling apparatus, a capping apparatus, a labeling apparatus, etc.

Apparatus 1 comprises:
- a treatment chamber 3 having an inlet station I and an outlet station O and within which a treatment path P for the closures 2 is defined, from input station I to output station O;
- conveying means apt to convey closures 2 through treatment chamber 3;
- a feeding device 4 arranged upstream of input station I and configured to feed a plurality of closures 2 to be treated (i.e. sterilized) to the treatment chamber 3; and
- a sterilization unit 5 arranged along treatment path P downstream of input station I and upstream of output station O and configured to sterilize closures 2, in particular to sterilize closures by means of a sterilization agent, preferably heated and vaporized hydrogen peroxide, as better described in the following.

In detail, treatment chamber 3 internally delimits a treatment environment within which closures 2 are to be treated.

In greater detail, sterilization unit 5 is defined by a portion of treatment chamber 3 and defines a sterilization section S within treatment chamber 3 along which closures 2 are to be sterilized.

In the non-limiting embodiment shown, treatment chamber 3 has a substantially parallelepiped configuration with a substantially horizontal orientation, meaning that treatment path P is substantially horizontal and that closures 2 are conveyed along this latter along a substantially horizontal direction.

Conveniently, the conveying means comprise a motorized conveyor 6 configured to convey closures 2 along treatment path P, from input station I, at which closures 2 to be sterilized are received by motorized conveyor 6, to output station O, at which sterilized closures 2 exit motorized conveyor 6.

In particular, motorized conveyor 6 conveys, in use, closures 2 along treatment path P with a predetermined transporting speed V1.

Feeding device 4 is configured to regulate a flow rate of the plurality of closures 2 through input station I.

Conveniently, apparatus 1 is accordingly configured so that the pitch of closures 2 along treatment path P depends on a relationship between transporting speed V1 and the flow rate of closures 2 through input station 1, as controlled by feeding device 4.

The pitch of the closures 2 along the treatment path P is to be considered as the distance along the path P for which there is one closure 2, during the conveying of the closures 2 along the treatment path P by means of the motorized conveyor 6. The pitch of the closures 2 is therefore the inverse of the number of closures 2 per unit length along the treatment path P, during the conveying of the closures 2 along the treatment path P by means of the motorized conveyor 6.

According to the non-limiting preferred embodiment shown, motorized conveyor 6 is housed within treatment chamber 3, in particular it is completely enclosed by treatment chamber 3, and comprises a conveyor belt 7 configured to convey closures 2 along treatment path P and to support closures 2 at a bottom side thereof.

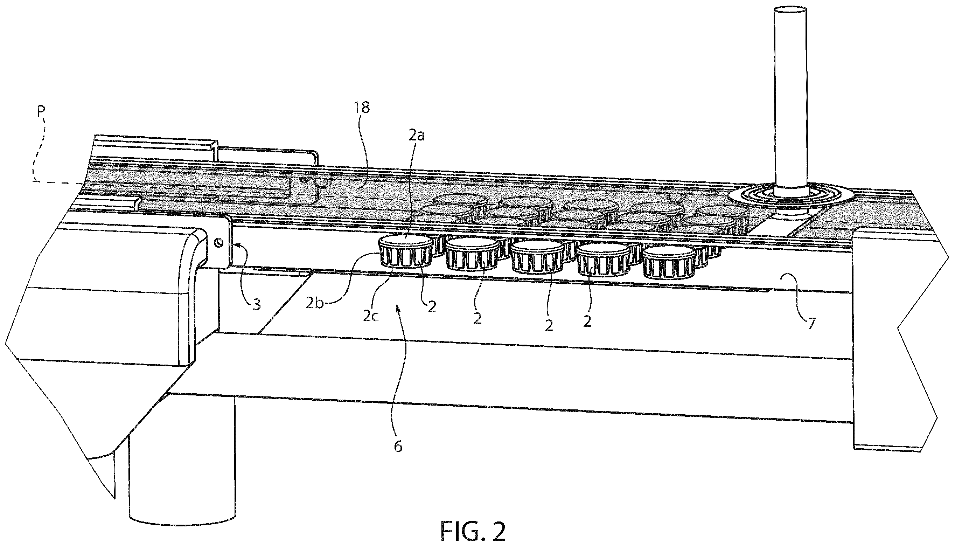

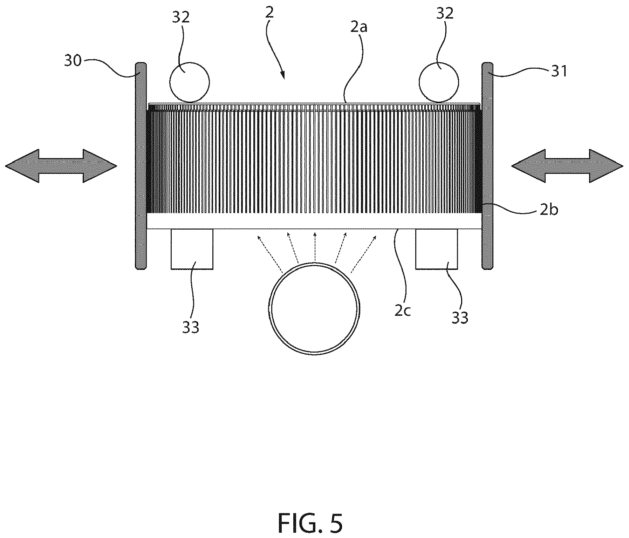

In detail, with reference to Figures 2 and 5, each closure 2 has a substantially cylindrical configuration and comprises a top wall 2a, a lateral wall 2b and a bottom rim 2c opposite to top wall 2a, relatively to lateral wall 2b.

Accordingly, conveyor belt 7 is configured to advance closures 2 from input station I to output station O while supporting these latter at the respective bottom rims 2c thereof.

Preferably, conveyor belt 7 extends longitudinally and horizontally along treatment path P. Hence, the above-mentioned transporting speed V1 is a translational transporting speed V1.

As visible in Figure 1, feeding device 4 comprises a pitching wheel 8 configured to regulate the above-mentioned flow rate of closures 2 through input station I by means of an angular speed V2 of the pitching wheel 8 itself.

In detail, pitching wheel 8 comprises an endless belt 10 and a plurality of rods 11 each one having a first end connected to the belt 10 and a second end, opposite the first end, defining a free end of the rod 11. In greater detail, rods 11 are arranged at a non-zero distance from one another along belt 10, in particular they are equidistant from one another along belt 10.

More precisely, each rod 11 is configured to push and convey a number of closure at a time to input station I.

In use, belt 10 is movable at predetermined settable speeds (i.e. angular speeds of the pulleys around which belt 10 revolves) to cyclically rotate each rod 11, thereby controlling the flow rate of closures 2 entering motorized conveyor 6 through input station I.

Conveniently, apparatus 1 is accordingly configured so that the pitch of closures 2 along treatment path depends on a relationship between the translational transporting speed V1 and the angular speed V2 of pitching wheel 8.In fact, for example, the higher the angular speed V2, at a constant translational speed V1, the lower the pitch of closures 2 along treatment path P; similarly, the higher the translational speed V1, at a constant angular speed V2, the higher will be the pitch, and so on.

In light of the above, it is possible to control the pitch of closures 2 along treatment path P independently from any variation in the imposed production rate of the packaging machine and/or from any format change.

In fact, as the production speed is substantially equal to the translational speed V1 divided by the pitch, an increase or a decrease in the production rate can be absorbed by an increase or a decrease, respectively, of the angular speed V2 of the pitching wheel, without variation of the translational speed V1 and therefore without variation of the treatment time.

Moreover, at constant translational speed V1 and angular speed V2, the pitch of the closures 2 along the treatment path P, upon a change in the format of the closures, is not subject to any variation, as the pitching wheel 8 or 8' is able to maintain the angular spacing of the closures around the axis of rotation of the pitching wheel 8 or 8' also upon the variation of the format.

This allows to maintain the treatment time as constant as possible, in particular to keep the treatment time constant, upon a variation of the production rate and/or of the closures format, thereby minimizing the risks of insufficient sterilization of closures 2 and/or of overheating closures 2.

According to the preferred embodiment shown, the conveyor belt 7 is configured to support (and advance) a plurality of closures 2 parallel to one another along a direction transversal, in particular orthogonal, to the conveying direction along treatment path P.

In other words, conveyor belt 7 is configured to convey a plurality of closures 2 in parallel, i.e. organized in successive parallel rows transversally the conveying direction, i.e. transversally to treatment path P.

In this way, a greater pitch flexibility can be achieved and the overall wear of the system is reduced.

According to the preferred and non-limiting embodiment shown, feeding device 4 comprises:
- a further conveyor belt 12 arranged upstream of pitching wheel 8 and configured to convey closures 2 towards pitching wheel 8 with a predetermined further translational transporting speed V3; and
- a further pitching wheel, preferably a star wheel 13, arranged upstream of further conveyor belt 12 and configured to regulate a flow rate of closures 2 towards further conveyor belt 12 by means of an angular speed V4 of the star wheel 13 itself.

Accordingly, apparatus 1 is configured so that the pitch of closures 2 along further conveyor belt 12 depends on a relationship between the further translational transporting speed V3 and the angular speed V4 of star wheel 13.

The above configuration allows to further enhance the control over the pitch of closures 2 to be treated, thereby increasing the possibilities to keep the treatment time as constant as possible.

In particular, the further translational transporting speed V3 is transversal and preferably orthogonal to the translational speed V1. In this way, the pitch along the treatment path P can be varied also by acting on the relationship between the further translational transporting speed V3 and the angular speed V4 of further star wheel 13.

This allows to obtain the above-mentioned advantages in terms of minimization of variation of treatment time upon variation of production rate and/or format change over a broader range of variation of production rate and/or format, as both the above mentioned relationships can influence the final pitch of the closures 2 along the treatment path P.

As visible in Figure 1, in one embodiment apparatus 1 comprises, along treatment path P:
- the sterilization section S defined by sterilization unit 5 and along which closures 2 are exposed to, in particular sprinkled, in use, with the sterilizing agent for sterilization thereof, preferably with heated and vaporized hydrogen peroxide;
- an activation section A arranged downstream of sterilization section S and along which the sterilizing agent settles and acts, in use, on closures 2; and
- a drying section D arranged downstream of activation section A and along which closures 2 are dried by means of a drying agent, preferably hot, sterile air.

In detail, sterilization section S comprises at least one sterilizing agent injector 14 configured to feed the sterilizing agent into sterilization section S itself, and a sterilizing agent extractor 15 configured for extracting the sterilizing agent directly from sterilization section S.

In greater detail, sterilization section S comprises at least two sterilizing agent injectors 14.

In this way, a sterilization rate of the sterilization process can be varied simply by partializing the flow of sterilization agent through the at least two injectors 14.

Similarly, drying section D comprises one or more, in particular a plurality of drying agent injectors 16, configured to feed the drying agent into drying section D.

In this way, a drying rate of the drying process can be varied simply by partializing the flow of drying agent through the plurality of injectors 16.

Conveniently, drying section D comprises at least one drying agent extractor 17, configured to extract the drying agent directly from drying section D.

In detail, drying section D comprises a plurality of extractors 17 configured to extract the drying agent directly from drying section D.

The above configuration ensures that the flow of drying agent, which is usually known to be larger than the flow of sterilization agent, does not interfere with the nominal flow of sterilization agent in sterilization section S.

Furthermore, since the drying agent is exhausted, at least for the greater part of it or totally, directly at drying section D, the advancement of closures 2 along treatment path P is not hindered by an otherwise too strong flow of the drying agent itself.

Advantageously, apparatus 1 comprises a cooling section C arranged downstream of drying section D and configured to cool down closures 2 received from drying section D prior to closures 2 reaching output station O.

In this way, closures 2 leave treatment path P with an appropriate temperature, thereby minimizing the risk of unwanted deformations due to an otherwise too high temperature of closures 2.

In one embodiment, apparatus 1 comprises a guide member 18 (Figure 2) facing conveyor belt 7 and movable towards and away from conveyor belt 7 so as to cooperate in contact with top walls 2a of closures 2 during the conveying thereof along treatment path P.

In practice, guide member 18 defines an upper guide member for closures 2 which can adapt, by its movement, to the format of the closures 2 themselves, in particular to their height.

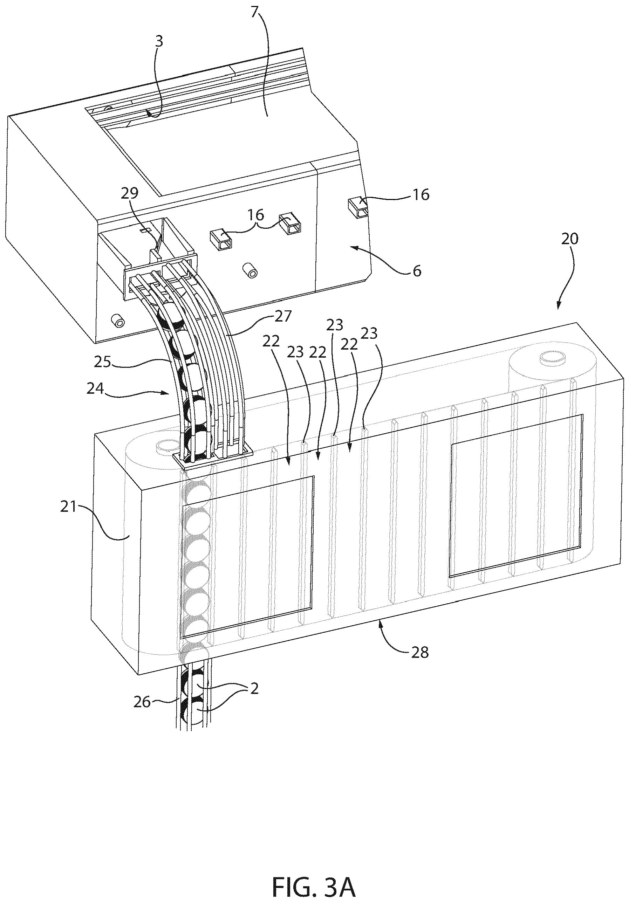

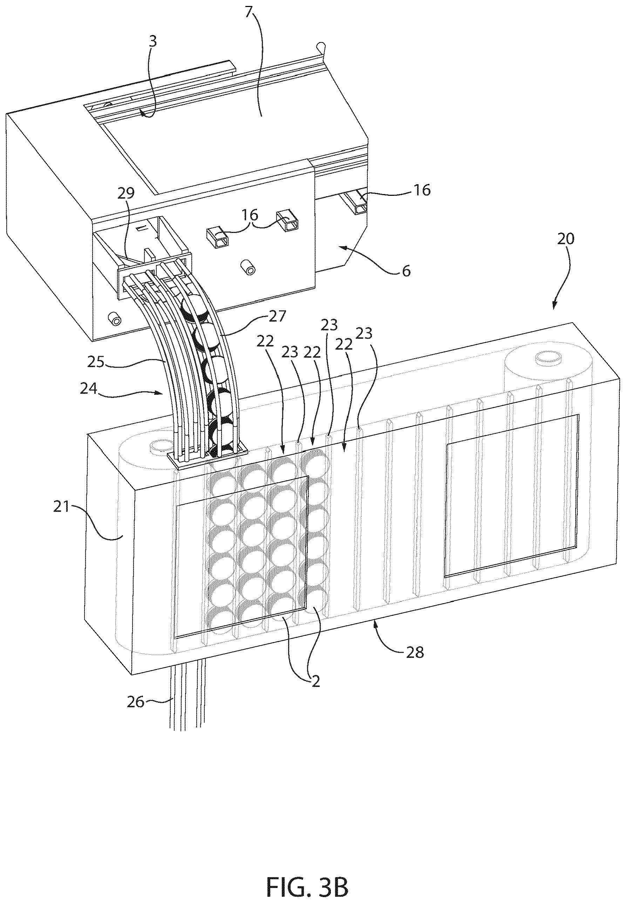

As visible in Figure 1 and, in particular, in Figures 3a and 3b, the apparatus 1 according to this non-limiting preferred embodiment comprises an accumulator device 20 arranged downstream output station O and configured to store sterilized closures 2.

Accumulator device 20 comprises an accumulating endless belt 21 defining a plurality of storing channels 22 extending transversally, in particular orthogonally, to a movement direction of the accumulating belt 21.

In detail, accumulating belt 21 is provided with a plurality of ribs 23 protruding from the planar external surface of the accumulating belt 21 itself and conveniently equidistant from one another so that each pair of ribs 23 delimits a storing channel 22 therebetween.

Accumulator device 20 is configured to control a movement of accumulating belt 21 along its movement direction (rightward in Figures 3a-3b) so as to sequentially and selectively put each storing channel 22 in communication with output station O for receiving and storing a number of closures 2, under a predetermined condition.

In detail, apparatus 1 comprises a guide rail 24 operatively connecting output station O to accumulator device 20 for guiding sterilized closures 2 from output station to accumulator device 20.

In greater detail, guide rail 24 comprises a first rail 25 which guides, during a first operative condition, sterilized closures 2 towards accumulator device 20.

Furthermore, in such first operative condition accumulating belt 21 is controlled so that one of the storing channels 22 is aligned with first rail 25 and with an output rail 26 to output closures 2 from the apparatus 1.

Hence, in the first condition, accumulator device 20 defines a pass-through for sterilized closures 2 (Figure 3a) .

Guide rail 24 further comprises a second rail 27, preferably adjacent to first rail 25, which guides, during a second operative condition, sterilized closures 2 towards accumulator device 20.

Furthermore, in such second operative condition, accumulating belt 21 is controlled so that storing channels 22 are sequentially and selectively aligned with second rail 27.

In this second operative condition, the storing channels 22 are not aligned with output rail 26; conversely, they are facing a wall 28 of the accumulator device 20, thereby causing the stored closures 2 to remain inside the accumulator device 20 itself.

Hence, in the second condition, accumulator device 20 defines a buffer for accumulating sterilized closures 2 (Figure 3b).

Once apparatus 1 returns back to the first operative condition, accumulating belt 21 is controlled to move until each storing channel 22, that has previously received and stored closures 2 during the second operative condition, is sequentially aligned with output rail 26 to output closures 2 from apparatus 1.

In one embodiment, apparatus 1 further comprises a switch 29 configured to be controlled:
- in a first position (Figure 3a), during the first operative condition, in which it allows the passage of closures 2 into first rail 25 and hinders the passage of closures 2 into second rail 27; and
- in a second position (Figure 3b), during the second operative condition, in which it allows the passage of closures 2 into second rail 27 and hinders the passage of closures 2 into first rail 25.

The switch is a gate.

It is to be considered that the apparatus comprises an accumulation system. The accumulation system comprises the accumulator device 20. The accumulation system comprises the guide rail 24. The accumulation system comprises the switch 29. The first operative condition of the apparatus corresponds to a first operative condition of the accumulation system. The second operative condition of the apparatus corresponds to a second operative condition of the accumulation system.

The accumulation system is very flexible, as in the first operative condition works as a normal passageway for the sterilized closures, and in the second operative condition works in such a way to accumulate the closures. Therefore the configuration of the accumulation system improves the compactness of the apparatus provided with the accumulation system.

The operation of apparatus 1 is described hereinafter with reference to an initial condition in which closures 2 are located upstream of feeding device 4.

In this condition, feeding device 4 feeds closures 2 to motorized conveyor 6 with the desired flow rate, thereby defining, together with the speed V1 of the conveyor belt 7, the pitch of closures 2 along treatment path P.

Along such treatment path P, each closure 2 undergoes a sterilization process, an activation process, a drying process and a cooling process, before leaving motorized conveyor at output station O and passing through accumulator device 20, if provided.

If the second operative condition occurs, closures 2 are stored in accumulator device 20 as described above and, then, released when the system is back to the first operative condition.

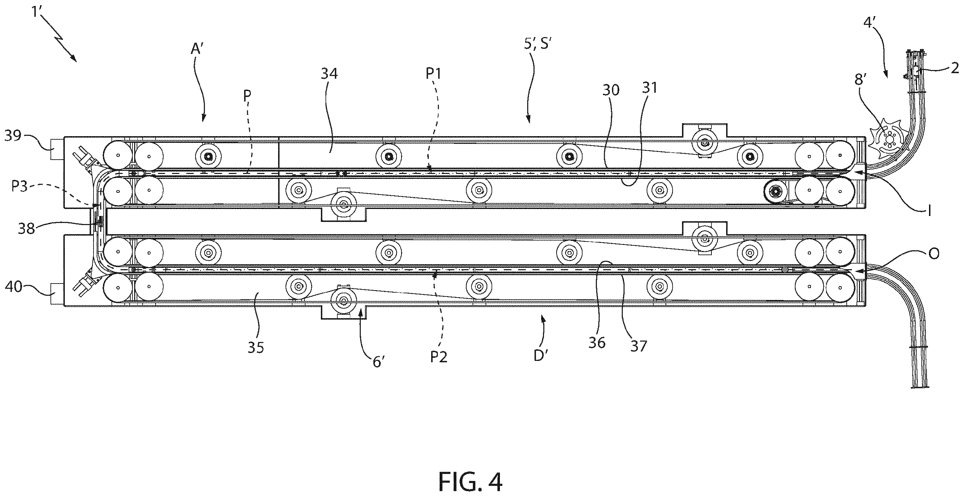

With reference to Figure 4, number 1' indicates as a whole a receptacle closures sterilization apparatus according to a second preferred embodiment of the present invention.

Since apparatus 1' is functionally similar to apparatus 1, only the differences between these two will be described, using the same reference numbers for similar or equivalent parts.

In particular, similarly to apparatus 1, apparatus 1' comprises:
- a motorized conveyor 6' configured to convey a plurality of closures 2 along a treatment path P, from an input station I, at which closures 2 to be sterilized are received by motorized conveyor 6', to an output station O, at which sterilized closures 2 exit motorized conveyor 6' and including a conveyor belt system (which will be better described in the following); and
- a feeding device 4' arranged upstream of input station I and configured to feed closures 2 to motorized conveyor 6' and to regulate a flow rate of the closures 2 through input station I.

More in particular, feeding device 4' incudes a pitching wheel 8' which is defined by a star wheel and the functioning of which is substantially equivalent to that of star wheel 13 or of pitching wheel 8.

Moreover, motorized conveyor 6', and in particular the conveyor belt system of motorized conveyor 6', comprises a first belt 30 and a second belt 31 facing one another and configured to retain each closure 2 therebetween at its lateral wall 2b and to advance the so retained closures 2 along treatment path P.

In particular, first belt 30 and second belt 31 are defined by endless belts wound around, and movable by means of, respective pulleys.

Accordingly, in this second embodiment treatment path P is comprised between first belt 30 and second belt 31.

In light of the above, closures 2 are fed, in use, by pitching wheel 8' to motorized conveyor 6' through input station I and between first belt 30 and second belt 31.

Advantageously, as visible in Figure 5, first belt 30 and second belt 31 are movable towards and away from one another, i.e. towards and away from treatment path P, so as to adapt to a dimension of closures 2, the dimension being defined, for each closure 2, as the distance of lateral wall 2b from the axis of the closure 2. For example, the dimension can be defined as the diameter or as the radial width of each closure 2.

In this way, it is ensured that first belt 30 and second belt 31 are always in contact with closures 2 to be advanced and that closures 2 are conveyed with the sufficient grip by such belts.

Conveniently, first belt 30 and second belt 31 are configured to advance at different respective translational speeds (resulting from the rotational speeds of the respective pulleys they are wound about), so that an angular displacement of each closure 2 about its own axis, in particular at least one rotation about its own axis, is obtained along treatment path P.

The above configuration improves the sterilization of closures 2, since the sterilizing agent can reach a surface of each closure 2 larger than the case in which no rotation is provided.

As visible in Figure 5, apparatus 1' further comprises a plurality (two in the embodiment shown) of wires 32 for contacting and guiding each closure 2 during the advancement thereof, in particular for contacting top wall 2a of each closure 2.

Wires 32 can be made of steel or of an elastomeric material.

Wires 32 are also movable towards and away from one another, as the belts 30, 31, for adapting to the dimension of closures 2.

Furthermore, wires 32 are configured to advance at the same speed of belts 30, 31, so as not to slide with respect to closures 2 during advancement thereof.

Apparatus 1' further comprises a slide, in particular a pair of fixed slides 33 arranged in a position opposite wires 32 with respect to treatment path P and configured to support closures 2 during advancement thereof.

In detail, slides 33 are fixed with respect to belts 30, 31 and wires 32, are configured to cooperate in sliding contact with bottom rim 2c and are movable towards and away from wires 32 to adapt to the height of closures 2.

In light of the above, belts 30, 31, wires 32 and slides 33 define and delimit, together, a guide channel for closures 2.

According to the preferred embodiment shown, apparatus 1' comprises a first treatment chamber 34 arranged downstream of input station I and a second treatment chamber 35 arranged downstream of first chamber 34, with respect to the treatment path.

In detail, first belt 30 and second belt 31, as well as the relative wires 32 and slides 33, are housed in first chamber 34, thereby defining a first section P1 of treatment path P.

Apparatus 1' further comprises a third belt 36 and a fourth belt 37 structurally and functionally equivalent to first belt 30 and second belt 31 and housed in second chamber 35, thereby defining a second section P2 of treatment path P.

Hence, third belt 36 and fourth belt 37 face one another and are configured to retain each closure 2 therebetween at lateral wall 2b thereof and to advance the so retained closures 2 along second section P2 of the treatment path P, the second section P2 being comprised between the third and fourth belts 36, 37.

Conveniently, apparatus 1' comprises wires 32 and slides 33 (not shown) also along second section P2 and positioned relatively to third and fourth belts 36, 37 in the same way that wires 32 and slides 33 are positioned relatively to first and second belts 30, 31.

According to this non-limiting preferred embodiment, first chamber 34 and second chamber 35 have a substantially parallelepiped configuration and are arranged parallel to one another.

In greater detail, first section P1 and second section P2 are arranged parallel to one another.

Furthermore, input station I is conveniently arranged at one of the end portions of first chamber 34, whereas output station O is arranged at one of the end portions of second chamber 35.

First section P1 comprises a sterilization section S', along which closures 2 are exposed to, in particular sprinkled, in use, with a sterilization agent for sterilization thereof, and an activation station A', arranged downstream of the sterilization section and along which the sterilization agent settles and acts, in use, on closures 2.

Thus, first chamber 34 defines a sterilization unit 5' of apparatus 1'.

Second section P2 comprises a drying section D', along which closures 2 are dried by means of a drying agent.

In light of the above, sterilization section S' and activation section A' are located within first chamber 34, whereas drying section D' is located within second chamber 35.

In one preferred embodiment (not shown) second chamber 35 could comprise a cooling section downstream of drying section D' for cooling down closures 2 upstream of output station O.

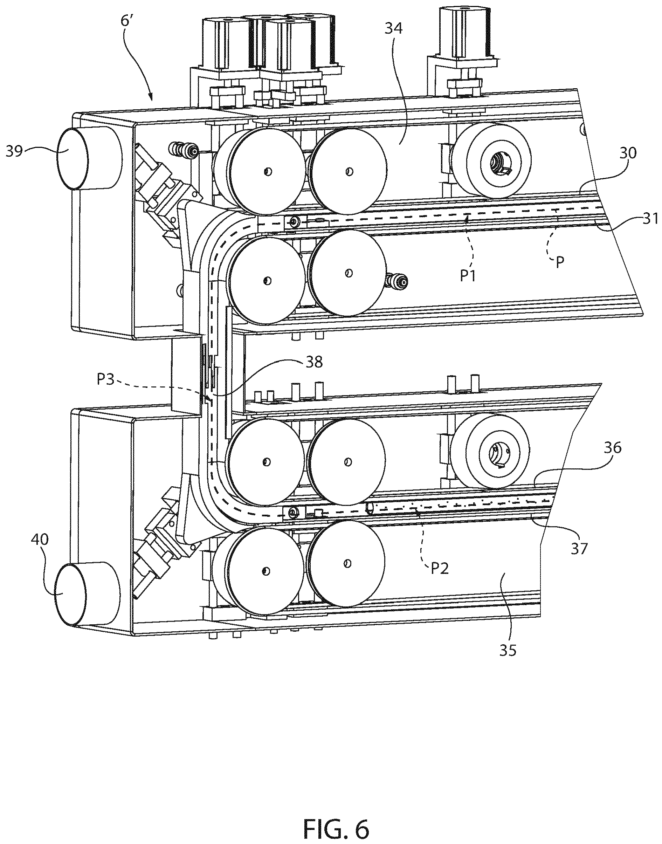

As visible in particular in Figure 6, apparatus 1' further comprises a fluid communication channel 38 fluidly interposed between first chamber 34 and second chamber 35, in particular arranged downstream of first section P1 and upstream of second section P2, and configured to guide closures 2 from first section P1 to second section P2 and to allow a passage of fluid between first chamber 34 and second chamber 35.

In detail, channel 38 fluidly and mechanically joins first chamber 34 and second chamber 35 to one another, thereby defining a third section P3 of treatment path P arranged transversal, in particular orthogonal to first section P1 and second section P2.

First chamber 34 comprises a sterilization agent extractor 39 configured to extract the sterilization agent previously injected into first chamber 34 directly from the first chamber 34 itself.

Preferably, sterilization agent extractor 39 is located at an end portion of first chamber 34 opposite to the end portion where input station I is located.

Second chamber 35 comprises a drying agent extractor 40 configured to extract the drying agent previously injected into second chamber 35 directly from second chamber 35 itself.

Preferably, drying agent extractor 40 is located at an end portion of second chamber 35 opposite to the end portion where output station O is located.

Advantageously, sterilization agent extractor 39 and drying agent extractor 40 are configured to be controlled so that, in use, the pressure inside second chamber 35 is higher than the pressure inside first chamber 34, thereby causing a flow of fluid within channel 38 from second chamber 35 towards first chamber 34, while preventing a flow of fluid from first chamber 34 towards second chamber 35.

This configuration prevents non-sterile fluid to enter the second chamber 35, which is a sterile environment and, accordingly, it allows to improve the sterilization quality of closures 2.

Conveniently, channel 38 has a narrow cross-section, in particular compared to the cross section of first chamber 34 and second chamber 35.

This configuration ensures that the overpressure within second chamber 35 with respect to first chamber 34 is maintained, while allowing the passage of fluid from second chamber 35 towards first chamber 34 and the passage of closures 2 from first chamber 34 towards second chamber 35.

Similarly to what described above for apparatus 1, apparatus 1' could comprise, even if not shown, an accumulator device 20 for storing sterilized closures 2 exiting from output station O.

Furthermore, feeding device 4' of apparatus 1' could comprise, even if not shown:
- a further conveyor belt arranged upstream of pitching wheel 8' and configured to convey closures 2 towards pitching wheel 8' with a predetermined further translational transporting speed; and
- a further pitching wheel, preferably a star wheel, arranged upstream of the further conveyor belt and configured to regulate a flow rate of closures 2 towards such further conveyor belt by means of an angular speed of the star wheel itself.

The advantages of apparatus 1, 1' according to the present invention will be clear from the foregoing description.

In particular, thanks to the presence of motorized conveyor 6, 6' and feeding device 4, 4' it is possible to control the pitch of closures 2 along treatment path P independently from any variation in the imposed production rate of the packaging machine and/or from any format change. This results in maintaining the treatment time as constant as possible, in particular in keeping the treatment time constant, along treatment path P, thereby minimizing the risks of insufficient sterilization of closures 2 and/or of overheating closures 2.

Furthermore, wherein feeding device 4, 4' is provided with a further conveyor belt 12 and a further pitching wheel 13, the control over the pitch of closures 2 to be treated is further enhanced, thereby increasing the possibilities to keep the treatment time as constant as possible.

Moreover, the presence of accumulator device 20 allows to output treated closures 2 from treatment chambers 3, 34, 35 as soon as they are treated, thereby avoiding that they remain inside the treatment chambers 3, 34, 35. In this way, an undesired overheating of closures 2 is avoided, even if the capping apparatus downstream of apparatus 1, 1' is stopped for a period of time. Also, given the fact that the known solutions provide that closures 2 are discarded when the capping apparatus is stopped, the present invention prevent the waste of closures 2 and of useful materials and resources.

In addition, the presence of guide member 18 allows apparatus 1 to rapidly and easily adapt to a format change of closures 2.

Furthermore, the fact that first, second third and fourth belts 30, 31, 36, 37 are movable and adjustable allows apparatus 1' to rapidly and easily adapt to a format change of closures 2.

Moreover, the presence of a cooling section C ensures that closures 2 leave treatment path P with an appropriate temperature, thereby minimizing the risk of unwanted deformations due to an otherwise too high temperature of closures 2.

In addition, the presence of drying agent extractors 17, 40 directly arranged at the respective drying sections D, D' ensures that the flow of drying agent, which is usually known to be larger than the flow of sterilization agent, does not interfere with the nominal flow of sterilization agent in sterilization sections S, S'.

Furthermore, the presence of multiple sterilizing agent injectors 14 and drying agent injectors 16 allows a simple and easy variation of the sterilization rate of the sterilization process, by means of the partialization of the flow of sterilization agent through the injectors 14, 16.

Finally, the fact that first belt 30 and second belt 31, as well as third belt 36 and fourth belt 37, translates at different speeds, thereby causing the rotation of closures 2 while being advanced along treatment path P, improves the sterilization of closures 2, since the sterilizing agent can reach a surface of each closure 2 larger than the case in which no rotation is provided.

Clearly, changes may be made to apparatus 1, 1' as described herein without, however, departing from the scope of protection as defined in the accompanying claims.

In particular, conveyor belt 7 of apparatus 1 could comprise a plurality of pegs organized in rows transversal, in particular orthogonal, to the advancement direction of the conveyor belt 7 itself, the pegs being configured to impede a sliding horizontal movement of the otherwise unconstrained closures 2 along the belt due to a too strong flow of drying agent.

## Claims

1. Receptacle closures sterilization apparatus (1; 1') comprising:
- a motorized conveyor (6, 6') configured to convey a plurality of closures (2) along a treatment path (P), from an input station (I), at which closures (2) to be sterilized are received by said motorized conveyor (6, 6'), to an output station (O), at which sterilized closures (2) exit the motorized conveyor (6, 6');
- a sterilization unit (5, 5') arranged along said treatment path (P), downstream of said input station (I) and upstream of said output station (O) and configured to sterilize said closures (2); and
- a feeding device (4, 4') arranged upstream of said input station (I) and configured to feed said plurality of closures (2) to the motorized conveyor (6, 6') by regulating a flow rate of said plurality of closures (2) through said input station (I).

2. The apparatus as claimed in claim 1, wherein said motorized conveyor (6, 6') conveys, in use, said closures (2) along said treatment path (P) with a predetermined transporting speed (V1);
and wherein said apparatus (1, 1') is configured so that the pitch of the closures (2) along said treatment path (P) depends on a relationship between said transporting speed (V1) and said flow rate of closures (2) through said input station (I).

3. The apparatus according to claim 2, wherein said motorized conveyor (6, 6') comprises at least one conveyor belt (7, 30, 31, 36, 37) configured to convey the closures along said treatment path (P) with a predetermined translational transporting speed (V1).

4. The apparatus according to any one of the foregoing claims, wherein said feeding device (4, 4') comprises at least one pitching wheel (8, 8') configured to regulate said flow rate of closures (2) through said input station (I) by means of an angular speed (V2) of the pitching wheel (8, 8') itself.

5. The apparatus according to claims 2 to 4, and wherein said apparatus is configured so that the pitch of the closures along said treatment path depends on a relationship between said translational transporting speed and said angular speed (V2) of said pitching wheel (8, 8').

6. The apparatus as claimed in claims 3 and 5, wherein said feeding device (4, 4') comprises a further conveyor belt (12) arranged upstream of said pitching wheel (8, 8') and configured to convey the closures (2) towards said pitching wheel (8, 8') with a predetermined further translational transporting speed (V3) which is transversal to said translational transporting speed (V1);
said feeding device (4, 4') comprising a further pitching wheel (13) upstream of said further conveyor belt (12) and configured to regulate a flow rate of closures (2) towards said further conveyor belt (12) by means of an angular speed (V4) of the further pitching wheel (13) itself;
wherein said apparatus (1, 1') is configured so that the pitch of the closures (2) along said further conveyor belt (12) depends on a relationship between said further translational transporting speed (V3) and said angular speed (V4) of said further pitching wheel (13).

7. The apparatus according to any one of the foregoing claims, and comprising an accumulator device (20) arranged downstream of the output station (O) and configured to store sterilized closures (2);
said accumulator device (20) comprising an accumulating belt (21) defining a plurality of storing channels (22) extending transversally with respect to a movement direction of the accumulating belt (21) itself;
said accumulator device (20) being configured to control a movement of the accumulating belt (21) along said movement direction so as to sequentially and selectively put each storing channel (22) in communication with said output station (O) for receiving and storing a number of said closures (2).

8. Apparatus according to claim 7, comprising a guide rail (24) operatively connecting the output station (O) to accumulator device (20) for guiding sterilized closures (2) from output station (O) to accumulator device (20), wherein:
- guide rail (24) comprises a first guide rail (25) and a second guide rail (27);
- apparatus is configured to adopt a first operative condition and a second operative condition;
- apparatus (1) is configured so that, in said first operative condition, first rail (25) guides sterilized closures (2) towards accumulator device (20), and at least one storing channel (22) is aligned at one end with first rail (25) and, at the opposite end of the same storing channel (22), with an output rail (26), to output closures (2) from the apparatus (1);
- apparatus (1) is configured so that, in said second operative condition, the second rail (27) guides sterilized closures (2) towards accumulator device (20), said storing channel (22) is aligned at said one end with second rail (27), and the same storing channel (22), at said opposite end, is closed by a wall (28) of the accumulator device (20) and not aligned with said output rail (26) ;
apparatus (1) further comprises a gate (29) configured to be controlled:
- in a first position, corresponding to the first operative condition, in which it allows the passage of closures (2) into first rail (25) and hinders the passage of closures (2) into second rail (27); and
- in a second position, corresponding to the second operative condition, in which it allows the passage of closures (2) into second rail (27) and hinders the passage of closures (2) into first rail (25).

9. The apparatus according to any one of the foregoing claims, and comprising along said treatment path (P):
- a sterilization section (S, S') defined by said sterilization unit (5, 5') and along which the closures (2) are exposed, in use, to a sterilizing agent for sterilization thereof, said sterilization section (S, S') comprising at least one sterilizing agent injector (14), configured to feed the sterilizing agent into the sterilization section (S, S'), and a sterilizing agent extractor (15, 39), configured for extracting the sterilizing agent, in particular directly extracting, from the sterilization section (S, S');
- an activation section (A, A') arranged downstream of said sterilization section (S, S') and along which the sterilizing agent settles and acts, in use, on the closures (2); and
- a drying section (D, D') arranged downstream of said activation section (A, A') and along which the closures (2) are dried by means of a drying agent, said drying section comprising one or more drying agent injectors (16), configured to feed the drying agent into the drying section (D, D'), and at least one drying agent extractor (17, 40), configured to extract the drying agent directly from the drying section (D, D').

10. The apparatus according to claim 8, and further comprising a cooling section (C) arranged downstream of said drying section (D, D') and configured to cool down the closures (2) received from the drying section (D, D') prior to the closures (2) reaching said output station (O).

11. The apparatus (1) according to any one of the foregoing claims, wherein said motorized conveyor (6) comprises at least one conveyor belt (7) configured to convey said closures (2) along the treatment path (P) and to support each closure (2) at a first side (2c) thereof;
said apparatus (1) comprising a guide member (18) facing said conveyor belt (7) and movable towards and away from said conveyor belt (7) so as to cooperate in contact with a second side (2a) of each closure (2), opposite to the first side (2b), during the conveying thereof along the treatment path (P), thereby adapting, in use, to the format of said closures (2).

12. The apparatus (1') according to any one of the claims 1 to 10, wherein said motorized conveyor (6') comprises a first belt (30) and a second belt (31) facing one another and configured to retain each closure (2) therebetween at a lateral wall (2b) of each closure (2) and to advance the so retained closures (2) along the treatment path (P), wherein the treatment path (P) is comprised between the first (30) and second (31) belts.

13. The apparatus (1') according to claim 12, wherein said first belt (30) and said second belt (31) are configured to advance at different respective translational speeds, so that an angular displacement of each closure (2) about its own axis is obtained along said treatment path (P).

14. The apparatus (1') according to claim 12 or 13, wherein said first belt (30) and said second belt (31) are movable towards and away from one another, so as to adapt to a dimension of said closures (2), said dimension being defined, for each closure (2), as the distance of said lateral wall (2b) from the axis of the closure (2).

15. The apparatus (1') as claimed in any one of claims 12 to 14, and comprising a first chamber (34) arranged downstream of said input station (I) and a second chamber (35) arranged downstream of the first chamber (34) and upstream of said output station (O), with respect to the treatment path (P);
said first belt (30) and said second belt (31) being housed in said first chamber (34), thereby defining a first section (P1) of the treatment path (P);
said first section (P1) comprising a sterilization section (S'), along which the closures (2) are exposed, in use, to a sterilization agent for sterilization thereof, and an activation section (A'), arranged downstream of the sterilization section (S') and along which the sterilization agent settles and acts, in use, on the closures (2);
said apparatus (1') comprising a third belt (36) and a fourth belt (37) arranged in said second chamber (35), thereby defining a second section (P2) of the treatment path (P), facing one another and configured to retain each closure (2) therebetween at said lateral wall (2b) and to advance the so retained closures (2) along the second section (P2) of the treatment path (P), wherein the second section (P2) of the treatment path is comprised between the third (36) and fourth (37) belts;
said second section (P2) comprising a drying section (D'), along which the closures (2) are dried by means of a drying agent.

16. The apparatus (1') as claimed in claim 15, and comprising a fluid communication channel (38) fluidly interposed between the first chamber (34) and the second chamber (35), arranged downstream of the first section (P1) and upstream of the second section (P2) and configured to guide the closures (2) from the first section (P1) to the second section (P2) and to allow a passage of fluid between the first chamber (34) and the second chamber (35);
wherein the first chamber (34) comprises a sterilization agent extractor (39) configured to extract the sterilization agent directly from the first chamber (34);
wherein the second chamber (35) comprises a drying agent extractor (40) configured to extract the drying agent directly from the second chamber (35);
and wherein the sterilization agent extractor (39) and the drying agent extractor (40) are configured to be controlled so that, in use, the pressure inside the second chamber (35) is higher than the pressure inside the first chamber (34), thereby causing a flow of fluid through said channel (38) from the second chamber (35) towards the first chamber (34).

17. Accumulation system (20) configured to be arranged downstream of an output station (O) of a conveyor (6) of a receptacle closures sterilization apparatus (1; 1'), said accumulation system being configured to store sterilized closures (2) and comprising an accumulator device (20); wherein
said accumulator device (20) comprises an accumulating belt (21) defining a plurality of storing channels (22) extending transversally with respect to a movement direction of the accumulating belt (21) itself;
said accumulator device (20) is configured to control a movement of the accumulating belt (21) along said movement direction so as to sequentially and selectively put each storing channel (22) in communication with said output station (O) for receiving and storing a number of said closures (2).

18. Accumulation system according to claim 17, the system comprising a guide rail (24) operatively connecting said output station (O) to accumulator device (20) for guiding sterilized closures (2) from output station (O) to accumulator device (20), wherein:
- guide rail (24) comprises a first guide rail (25) and a second guide rail (27);
- accumulation system is configured to adopt a first operative condition and a second operative condition;
- accumulation system is configured so that, in said first operative condition, first rail (25) guides sterilized closures (2) towards accumulator device (20), and at least one storing channel (22) is aligned at one end with first rail (25) and, at the opposite end of the same storing channel (22), with an output rail (26), to output closures (2) from the apparatus (1), the output rail (26) being a part of the accumulation system;
- accumulation system is configured so that, in said second operative condition, the second rail (27) guides sterilized closures (2) towards accumulator device (20), said storing channel (22) is aligned at said one end with second rail (27), and the same storing channel (22), at said opposite end, is closed by a wall (28) of the accumulator device (20) and not aligned with said output rail (26);
accumulation system (1) further comprises a gate (29) configured to be controlled:
- in a first position, corresponding to the first operative condition, in which it allows the passage of closures (2) into first rail (25) and hinders the passage of closures (2) into second rail (27); and
- in a second position, corresponding to the second operative condition, in which it allows the passage of closures (2) into second rail (27) and hinders the passage of closures (2) into first rail (25).
